# EUROPÄISCHE PATENTSCHRIFT

(11) **EP 1 564 618 B1**
(45) Veröffentlichungstag und Bekanntmachung des Hinweises auf die Patenterteilung: **22.08.2007**
(21) Anmeldenummer: 05000210.4
(22) Anmeldetag: 07.01.2005
(51) Int. Cl.: G05F 1/70, H02M 7/219, H02M 7/217, H02M 1/00

(54) **Schaltung zur Leistungsfaktorkorrektur für Schaltnetzteile, Ladegeräte und dergleichen**
Circuit for power factor correction in switching power supplies, chargers and the like
Circuit pour la correction du facteur de puissance dans alimentations de puissance à découpage, chargeurs et similaires.

(30) Priorität: 14.02.2004 DE 202004002305 U
(43) Veröffentlichungstag der Anmeldung: 17.08.2005
(73) Patentinhaber: Jungheinrich Aktiengesellschaft, 22047 Hamburg (DE)
(72) Erfinder: Maasland, Hans-Hermann, Dipl.-Ing., 25451 Quickborn (DE)
(74) Vertreter: Hauck Patent- und Rechtsanwälte

(56) Entgegenhaltungen:
- EP-A- 0 360 156
- EP-A- 0 891 038
- US-A- 4 412 277
- US-A- 5 930 127

## Beschreibung

Die vorliegende Erfindung betrifft eine Schaltung zur Leistungsfaktorkorrektur für Schaltnetzteile, Ladegeräte und dergleichen, insbesondere zur Verwendung in einem Flurförderzeug.

Wird ein nicht sinusförmiger Strom dem 230 V-Netz entnommen, so bewirkt ein hoher Oberwellengehalt eine erhöhte Verlustleistung, beispielsweise in den Trafostationen. Diese Verlustleistung muß letztlich von den Kraftwerken zusätzlich erzeugt und in das Netz eingespeist werden. Gesetzlich geregelt ist durch die Norm DIN EN 6100-3-2 zur elektromagnetischen Verträglichkeit (EMV), daß bei der Entnahme von nicht-sinusförmigem Strom eine Leistungsfaktorkorrektur (PFC = Power Factor Correction) zu erfolgen hat.

Aufgrund der gesetzlichen Vorschrift sind eine Vielzahl von unterschiedlichen Schaltungen zur Leistungsfaktorkorrektur bekannt. Eine kritische Größe bei den Schaltungen zur Leistungsfaktorkorrektur ist die in der Schaltung auftretende Verlustleistung, die sich aus den Durchlaßverlusten und den Schaltverlusten zusammensetzt.

Aus EP 0 360 156 ist ein Schaltnetzteil mit einer Leistungsfaktorkorrektur bekannt, der eine niederfrequente Wechselspannungsquelle und ein Inverter bekannt. Der Inverter besteht aus einem Paar von in Reihe geschalteten ersten und zweiten unidirektionalen Schaltelementen, die gesteuert werden, um mit einer hohen Frequenz alternierend ein- und ausgeschaltet zu werden. Angesteuert werden die Schaltelemente derart, daß das erste und das zweite Schaltelement und der Inverter einen Chopper bilden, der eine Wechselspannung von der Wechselspannungsquelle unterbricht, damit an den zugeschalteten Spulen sich eine Spannung entwickelt, die die gewünschte Gleichspannung an einem Kondensator ergibt.

Aus US 4,412,277 ist ein Gleichrichter mit einem verbesserten Leistungsfaktor bekannt. Die vorgeschlagene Brückenschaltung besitzt zwei Transistoren, die entsprechend angesteuert werden.

EP 0 891 038 A1 betrifft eine Stromversorgungseinrichtung für ein tragbares elektronisches Gerät, wie beispielsweise einer Armbanduhr.

Aus US 5,930,127 ist eine Brückenschaltung bekannt, bei der in der Brückendiagonale Kondensator und Spule geschaltet sind.

Der Erfindung liegt die Aufgabe zugrunde, eine Schaltung zur Leistungsfaktorkorrektur bereitzustellen, die bei einer möglichst einfachen und robusten Ansteuerung nur eine geringe Verlustleistung besitzt.

Erfindungsgemäß wird die Aufgabe durch eine Schaltung mit den Merkmalen aus Anspruch 1 gelöst. Vorteilhafte Ausgestaltungen der erfindungsgemäßen Schaltung bilden die Gegenstände der Unteransprüche.

Die erfindungsgemäße Schaltung besitzt eine Brückenschaltung, die vier in zwei Halbbrücken geschaltete Dioden aufweist. Hierbei wird als eine Halbbrücke derjenige Teil der Brückenschaltung bezeichnet, der die Anschlüsse der Brücke mit den Kontakten der Diagonale verbindet. (In Fig. 1 bilden D2 und D4 eine erste Halbbrücke und D1 und D3 die zweite Halbbrücke.)

In einer ersten Halbbrücke sind parallel zu den Dioden zwei Schalttransistoren geschaltet. Dabei bilden bevorzugt eine Diode und ein Schalttransistor jeweils einen MOSFET-Transistor. Zwei Spulen sind jeweils zwischen die Anschlüsse einer Wechselspannungsquelle und zwei Anschlüsse der Brückenschaltung geschaltet. Diagonal in der Brückenschaltung ist ein Kondensator geschaltet, der zur Energiespeicherung dient. Der Diagonalanschluß der ersten Halbbrücke, also der Halbbrücke, die mit den Schalttransistoren versehen ist, ist auf Masse gelegt. Durch die erfindungsgemäße Schaltungsanordnung kann die Verlustleistung um 40 % oder mehr reduziert werden, ohne daß der Aufwand zur Ansteuerung der MOSFET-Schalttransistoren sich erheblich vergrößert. In dem erfindungsgemäßen Schaltkreis sind auch in der zweiten Halbbrücke zwei Schalttransistoren parallel zu den Dioden geschaltet. Diese Schaltung kann als eine Schaltung zur Leistungsfaktorkorrektur mit einem kompletten Synchrongleichrichter aufgefaßt werden. Als Schalttransistoren sind MOSFETs vorgesehen. Die Steuerung erfolgt in der erfindungsgemäßen Ausgestaltung mit vier MOSFETs, indem ein erstes MOSFET mit einem vorbestimmten Takt zur Leistungsfaktorkorrektur angesteuert wird, wenn der Stromkreis über die Diode des anderen MOSFETs in der Halbbrücke gesteuert wird, wobei eines der MOSFETs in der anderen Halbbrücke zur Herabsetzung der Drain-Source-Spannung invertiert mit einem vorbestimmten Takt angesteuert wird.

Bevorzugt erfolgt für die erfindungsgemäße Schaltung eine Ansteuerung über eine Steuerung, die einen Halbwellendetektor aufweist, um die Ansteuerung abhängig von den Halbwellen vorzunehmen.

Zu einem besseren Verständnis der Schaltung und deren Ansteuerung sei zwischen einem Ladevorgang und einem Entladevorgang der Spule unterschieden, wobei beim Entladevorgang einer der Schalttransistoren gemäß einem vorbestimmten Taktverhältnis angesteuert wird. Während des Ladevorgangs der Spule schließt einer der Schalttransistoren während einer ersten Halbwelle derart, daß über die Diode an dem zweiten Schalttransistor ein geschlossener Stromkreis mit den Netzanschlüssen vorliegt. Während der nachfolgenden Halbwelle schließt der zweite Schalttransistor derart, daß ein Stromkreis mit der Wechselspannungsquelle über die Diode an dem ersten Schalttransistor geschlossen ist.

Während des Entladevorgangs der Spule wird während einer ersten Halbwelle ein geschlossener Stromkreis über eine erste Diode in der zweiten Halbbrücke - in der Halbbrücke ohne Schalttransistor -, die Brückendiagonale und eine Diode der ersten Halbbrücke hergestellt. In der zweiten Halbwelle liegt ein geschlossener Stromkreis über die zweite Diode in der zweiten Halbbrücke, die Brückendiagonale und eine Diode in der ersten Halbbrücke vor. Die Steuerung steuert bei dieser Ausgestaltung einen ersten Schalttransistor mit einem vorbestimmten Takt zur Leistungsfaktorkorrektur an, wenn der Stromkreis über die Diode des anderen Schalttransistors geschlossen ist.

Die vorstehende Schaltung kann als eine Schaltung zur Leistungsfaktorkorrektur mit einem halben Synchrongleichrichter aufgefaßt werden.

Bevorzugt erfolgt die Steuerung dieser Schaltung während eines Ladevorgangs der Spule, indem ein erster Schalttransistor in einer der Halbbrücken während einer ersten Halbwelle schließt derart, daß über die andere Diode in der Halbbrücke ein geschlossener Stromkreis mit den Wechselstromanschlüssen vorliegt. Während der anderen Halbwelle wird der zweite Schalttransistor in der Halbbrücke geschlossen derart, daß über die andere Diode in der Halbbrücke ein geschlossener Stromkreis mit den Netzanschlüssen vorliegt.

Während des Entladevorgangs der Spule wird während einer ersten Halbwelle ein geschlossener Stromkreis über eine der Dioden in einer der Halbbrücken, die Brückendiagonale und eine der Dioden in der anderen Halbbrücke geschlossen. In der nachfolgenden zweiten Halbwelle ist der geschlossene Stromkreis über die Brückendiagonale und die anderen beiden Dioden geschlossen.

Bevorzugt besitzen die Spulen gleiche Wicklungen und sind miteinander gekoppelt, wobei die Wicklungen den gleichen Widerstand und die gleiche Induktivität besitzen.

Die erfindungsgemäße Schaltung wird nachfolgend anhand von zwei Ausführungsbeispielen näher erläutert. Es zeigt:
- Fig. 1: eine Prinzipschaltskizze für eine PFC-Schaltung mit halbem Synchrongleichrichter,
- Fig. 2: eine Schaltskizze im Detail,
- Fig. 3: eine Prinzipschaltskizze einer PFC-Schaltung mit komplettem Synchrongleichrichter,
- Fig. 4: einen Schaltplan im Detail für die Schaltung aus Fig. 3,
- Fig. 5: eine PFC-Schaltung nach dem Stand der Technik und
- Fig. 6: ein Störmodell zur der erfindungsgemäßen PFC-Schaltung.

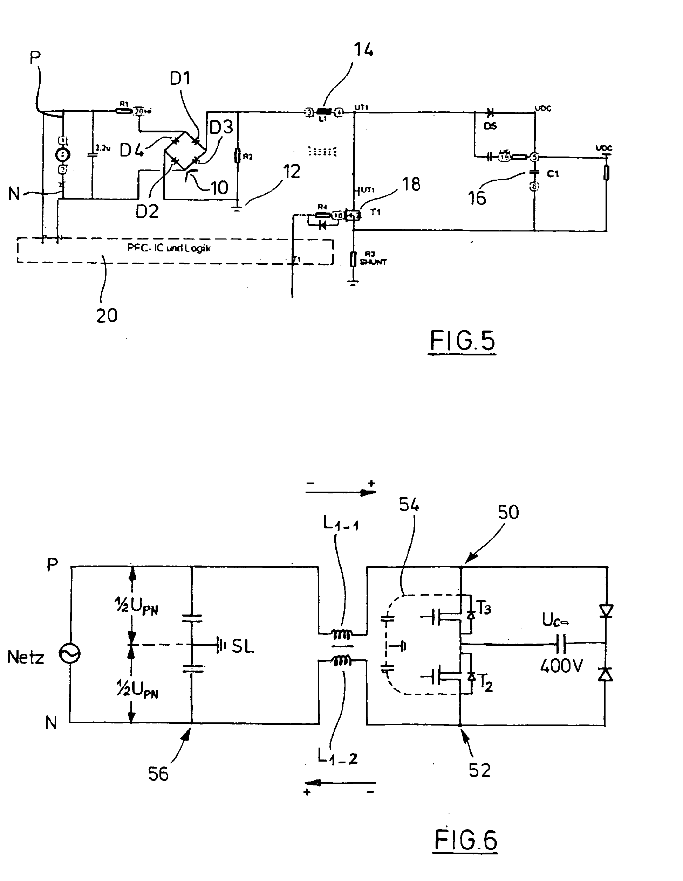

Zur Erläuterung sei zunächst die Schaltung gemäß Fig. 5 erläutert: Die Schaltung besitzt eine Gleichrichterbrücke 10, in der die Dioden D1 bis D4 angeordnet sind. D1 und D3 sowie D2 und D4 bilden hierbei jeweils eine Halbbrücke. Die Halbbrücken sind mit den Anschlüssen P und N mit einer Netzversorgung verbunden. Der Diagonalanschluß der Gleichrichterbrücke zwischen den Dioden D2 und D4 in einer Halbbrücke liegt in 12 auf Masse. Der zweite Diagonalanschluß zwischen den Dioden D1 und D3 ist mit einer Speicher- bzw. Boosterdrossel 14 (L1) verbunden. Hinter der Drossel 14 ist eine Boosterdiode 5 in Durchlaßrichtung in einem Zwischenkreis geschaltet. Der Zwischenkreis besitzt parallel zueinander einen Kondensator 16 (C1) und einen Schalttransistor 18 (T1). Der Schalttransistor 18 ist über einen Shunt 20 auf Masse geschaltet.

Die Ansteuerung des Schalttransistors 18 erfolgt über eine Steuerung 20, die den Transistor 18 abhängig von der vorzunehmenden Leistungsfaktorkorrektur mit einem pulsweitenmodulierten Taktsignal schaltet.

Während eines Ladevorgangs der Speicherdrossel fließt der Strom während einer positiven Halbwelle vom Netzanschluß P über die Diode D1 über Spule L1 und Transistor T1 zurück zur Diode D2 ins Netz N. Bei einer negativen Halbwelle fließt der Strom über die Diode D3, die Spule 14, den Transistor T1 und die Diode D4 zurück zum Netzanschluß P.

Bei einem Entladevorgang der Spule 14 fließt bei einer positiven Halbwelle der Strom vom Netz P über die Diode D1 über L1 und Diode D5 sowie über den Kondensator 16 zurück über die Diode D5 ins Netz in den Anschluß N. Bei der negativen Halbwelle fließt der Strom über die Diode D3, Spule L1, Diode D5, Kondensator C1 und Diode D4 zurück zum Anschluß P. Der Entladevorgang ist hierbei abhängig vom Tastverhältnis des Schalttransistors 18, da bei geschaltetem Transistor 18 der Strom nach der Spule 14 unter Umgehung von Boosterdiode D5 und Zwischenkreiskondensator C1 zurückfließen kann.

Die Gleichspannung liegt an der Schaltung beispielsweise in 16 an. Das Taktverhältnis bestimmt bei dieser Schaltung den Oberwellenanteil und damit den Leistungsfaktor.

Die Verluste ergeben sich bei dieser Schaltung als die Verlustleistung aus den Durchlaßverlusten und zusätzlich den Schaltverlusten von drei aktiven Halbleiterbauteilen (D1, T1 und D2 bzw. D1, D5 und D2) sowie den zusätzlichen Widerständen im Kreis.

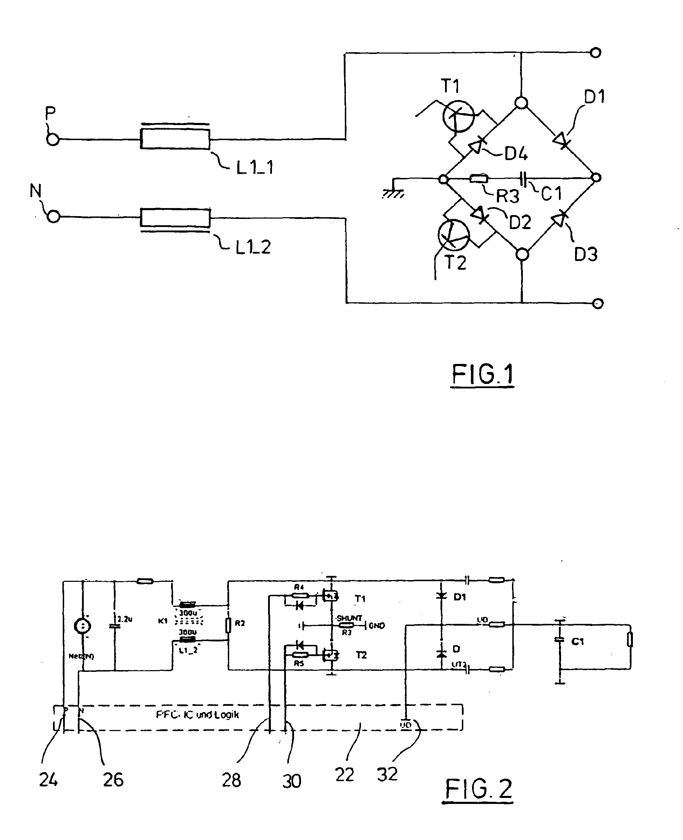

Fig. 1 zeigt einen Brückengleichrichter mit Dioden D1 bis D4. Die Schalttransistoren T1 und T2 sind parallel zu den Dioden D2 und D4 geschaltet. In die Brückendiagonale ist ein Kondensator C1 mit einem Widerstand R3 geschaltet. Der diagonale Anschluß in der Halbbrücke D2, D4, in der die Schalttransistoren D1 und D2 geschaltet sind, liegt auf Masse. Die Zuleitungen zu der Brückenschaltung sind zwei Wicklungen einer Speicher- bzw. Boosterdrossel L1 mit ihren Wicklungen L1_1 und L1_2 geschaltet.

Der Aufbau besitzt beispielsweise zwei MOSFET-Schalttransistoren T1 und T2, sowie zwei Dioden D1 und D2, die auch durch eine Doppeldiode ersetzt werden können. Ferner sind in dem Schaltkreis die Speicher- bzw. Boosterdrossel L1 sowie der Speicherkreiskondensator C1 als Energiespeicher vorgesehen.

Die Speicherdrossel L1 besteht aus zwei getrennten Wicklungen L1_1 und L1_2 mit dem gleichen Gesamtwiderstand und der gleichen Gesamtinduktivität wie sie bereits für die Schaltung aus Fig. 5 beschrieben wurde. Die Auslegung der Drossel erfolgt mithin ebenso wie in der Standardschaltung.

Die Funktionsweise der Schaltung gemäß Fig. 1 läßt sich wie folgt beschreiben:
- Ladevorgang der Speicherdrossel: Während einer positiven Halbwelle fließt der Strom vom Netz P über L1_1 und Transistor T1 zurück über die Diode D2 und L1_2 zu dem Netzanschluß N. Für die negative Halbwelle fließt der Strom vom Netzanschluß N über L1_2 und den Transistor T2 zurück über die Diode D4, die dem Transistor T1 zugeordnet ist zurück zu dem Netzanschluß T.
- Während des Entladevorgangs der Speicherdrossel fließt der Strom während der positiven Halbwelle vom Netzanschluß P über die Spule L1_1 über die Diode D1 und über Kondensator C1 zurück über die Diode D2 und L1_2 zurück zum Netzanschluß N. Bei der negativen Halbwelle fließt der Strom über den Netzanschluß N über L1_2 über die Diode D3 und den Kondensator C1 zurück über die Diode 4 und L1_1 zum Netzanschluß P.

Fig. 2 zeigt eine konkrete Ausgestaltung der Schaltung mit einer Steuerung 22, an der über die Anschlüsse 24 und 26 Werte der Netzspannung anliegen, über die Ausgänge 28 und 30 die Schalttransistoren T1 und T2 geschaltet werden. In 32 liegt der Spannungswert aus dem Zwischenkreis an. Bei der Ansteuerung schalten beide Schalttransistoren T1 und T2 auf das Minuspotential bzw. auf Masse. Das MOSFET, das gerade als Diode verwendet wird, bekommt ein Hochsignal am Gate über die gesamte Halbwelle, während das andere MOSFET im vorbestimmten pulsweitenmodulierten Takt der Steuerung 22 geschaltet wird. In den nächsten Halbwelle liegt an dem Gate des anderen MOSFET das Hochsignal an, so daß dieses MOSFET als Diode verwendet wird, und das andere MOSFET wird getaktet geschaltet. In der Ansteuerung 22 ist hierfür lediglich ein Halbwellendetektor und eine Logik erforderlich. Die Kühlflächen können verkleinert werden und die Leistung pro Volumeneinheit steigt. Vergleicht man die Verlustleistung der unter Fig. 5 geschilderten Standard-PFC-Schaltung mit einer Boosterdiode, so reduziert sich die Verlustleistung auf 56 % der Standardlösung. Technisch bekannt ist auch eine Leistungsfaktorkorrekturschaltung ohne Boosterdiode D5, deren Verlustleistung zwar bereits auf 67 % der Standardlösung reduziert ist, jedoch immer noch deutlich über der in Fig. 2 vorgeschlagenen Lösung liegt.

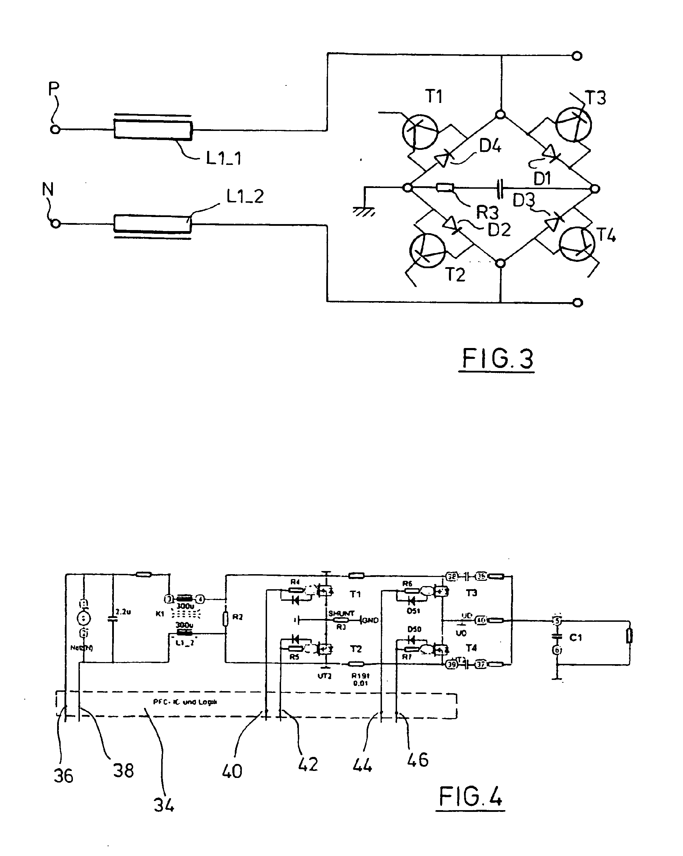

Fig. 3 zeigt schematisch den Aufbau einer Leistungsfaktorkorrekturschaltung mit einem kompletten Synchrongleichrichter, mit vier Schalttransistoren T1 bis T4 in einer Brückenschaltung hinter der Speicher- bzw. Boosterdrossel L1 mit ihren Wicklungen L1_1 und L1_2. Der Zwischenkreiskondensator C1 mit dem Shunt-Widerstand R1 ist in die Brückendiagonale geschaltet.

Der Ladevorgang der Speicherdrossel erfolgt wie vorstehend beschrieben, wobei wiederum kein Strom über die Brückendiagonale fließt. Im Entladevorgang fließt der Strom von dem Netzanschluß P über L1_1 über die Diode D1 und über Kondensator C1 zurück zur Diode D2 und L1_2 zum Netzanschluß N. Bei der negativen Halbwelle fließt der Strom vom Netzanschluß N über L1_2, die Diode D3 und über den Kondensator C1 zurück über die Diode D4 und L1_1 hin zu dem Netzanschluß P.

Fig. 4 zeigt eine Ausgestaltung des vorstehenden Schaltkreises mit einer Steuerung 34, an der die Wechselspannungswerte in 36 und 38 anliegen. Die Schalttransistoren T1 und T2 werden über die Anschlüsse 40 und 42 angesteuert, während die Schalttransistoren T3 und T4 über die Anschlüsse 44 und 46 angesteuert werden. Die Steuerung 34 besitzt zwei galvanisch getrennte Treiber für die in den Halbbrücken angeordneten Schalttransistoren. Die Ansteuerung des Synchrongleichrichters erfolgt in der positiven Netzhalbwelle, indem die Diode von T2 dauernd auf hoch geschaltet ist und T1 mit dem PWM-Takt geschaltet wird. Die Boosterdiode in T3 wird invertiert pulsweitenmoduliert getaktet, um bei dem MOSFET die Spannung U_{sd} zu reduzieren. In der negativen Halbwelle wird T2 mit T1 getauscht und T3 mit T4.

Die Verlustleistung reduziert sich bei dieser Schaltung auf 45 % der unter Fig. 5 beschriebenen Standardschaltung, wobei der Vergleich für MOSFET-Transistoren mit geringerem Durchlaßwiderstand (R_{Dson}) gilt.

Im Standard-PFC-Model (Fig. 5) ist zu erkennen, daß die Masse des MOSFETs in der positiven Halbwelle auf Netz-"N" und in der negativen Halbwelle auf "P" liegt, bedingt durch den Gleichrichter direkt am Netz. Der Spannungshub der DC - Boosterdrossel am Drain - des MOSFETs wirkt immer mit der vollen Zwischenkreisspannung auf das Gehäuse (SL-Anschluß). Da der Drain-Anschluß eines MOSFETs eine relativ große Fläche zum Kühlkörper bildet, ergibt sich daraus eine parasitäre Koppelkapazität zum Gehäuse bzw. zum Schutzleiter. Da die Schaltgeschwindigkeit der Transistoren ständig zunimmt und im Standardmodel die volle U_{c} = Zwischenkreis-Spannung des Kondensators wirkt, ergibt sich ein hohe du/dt der Drain-Spannung T1 zum Gehäuse (z.B. du/dt = 400 V/0.1 us = 4000 V/us).

Fig. 6 zeigt ein Störmodell zu der erfindungsgemäßen PFC-Schaltung, bei dem 50 den Drainanschluß mit beispielsweise +200 V, 52 den Sourceanschluß mit beispielsweise -200 V und 54 einen parasitären Koppelwiderstand zeigt. 56 kennzeichnet die Filterkondensatoren (Y-Kondensatoren), die das Gehäuse mit Kühlkörper mit dem Netzanschluß elektrisch leitend verbinden.

In dem Störmodell gemäß Fig. 6 ist zu sehen, daß die Masse der PFC-Schaltung im Einschalt-Zustand (also der Ladephase der Drossel z.B. in der positiven Halbwelle) sich annähernd auf Schutzleiterpotential befindet. Im Ausschalt-Zustand (in der Entladephase der Drossel) wandert der Drain-Anschluß von T1 auf die halbe positive Zwischenkreis-Spannung und die Masse (Source von T1) auf die halbe negative Zwischenkreisspannung. Dies ergibt sich aus der symmetrisch verteilten Quellspannung der AC-Boosterdrossel vor dem Gleichrichter. Dies ergibt eine halb so große Drain-Spannung T1 zum Gehäuse (z.B. du/dt = 200 V/0.1 us = 2000 V/us). Der Netz-Filteraufwand wird hier deutlich reduziert.

## Patentansprüche

1. Schaltung zur Leistungsfaktorkorrektur für Schaltnetzteile, Ladegeräte und dergleichen, mit
- einer Brückenschaltung, die vier in zwei Halbbrücken geschaltete Dioden (D1, D2, D3, D4) aufweist,
- jeweils zwei in den Halbbrücken parallel zu den Dioden (D1, D2, D3, D4) geschalteten MOSFETs (T1, T2, T3, T4), und
- zwei Spulen (L1_1, L1_2), die jeweils zwischen Anschlüsse (P, N) einer Wechselspannungsquelle und zwei Anschlüsse der Brückenschaltung geschaltet sind,
- einem Kondensator (C1), der diagonal in der Brückenschaltung geschaltet ist,
- wobei der Diagonalanschluß der ersten Halbbrücke mit Masse verbunden ist, **dadurch gekennzeichnet, daß**
- eine Steuerung ein erstes MOSFET mit einem vorbestimmten Takt zur Leistungsfaktorkorrektur ansteuert, wenn der Stromkreis über die andere Diode des anderen MOSFETs der Halbbrücke gesteuert wird, und eines der MOSFETs in der anderen Halbbrücke zur Herabsetzung der Drain-Source-Spannung invertiert mit einem vorbestimmten Takt angesteuert wird.

2. Schaltung nach Anspruch 1, **dadurch gekennzeichnet, daß** eine Steuerung (22) zur Ansteuerung der Schalttransistoren (T1, T2) vorgesehen ist, wobei die Ansteuerung der Schalttransistoren abhängig von der Halbwelle (24, 26) erfolgt.

3. Schaltung nach Anspruch 2, **dadurch gekennzeichnet, daß** die Steuerung während eines Ladevorgangs der Spule (L1_1, L1_2) einen ersten Schalttransistor (T1) während einer ersten Halbwelle schließt derart, daß über die Diode (D2) an dem zweiten Schalttransistor (T2) ein geschlossener Stromkreis mit den Netzanschlüssen (P, N) vorliegt, und während der anderen Halbwelle den zweiten Schalttransistor (T2) schließt derart, daß über die Diode (D4) an dem ersten Schalttransistor (T1) ein geschlossener Stromkreis mit den Netzanschlüssen (P, N) vorliegt.

4. Schaltkreis nach Anspruch 2 oder 3, **dadurch gekennzeichnet, daß** während eines Entladevorgangs der Spule (L1_1, L1_2) während einer ersten Halbwelle ein geschlossener Stromkreis über eine erste Diode (D1) in der zweiten Halbbrücke, die Brückendiagonale (C1) und eine Diode (D2) in der ersten Halbbrücke vorliegt, und in der zweiten Halbbrücke ein geschlossener Stromkreis über die zweite Diode (D3) in der zweiten Halbbrücke, die Brückendiagonale (C1) und eine Diode (D4) in der ersten Halbbrücke vorliegt.

5. Schaltkreis nach Anspruch 3 oder 4, **dadurch gekennzeichnet, daß** die Steuerung (22) einen ersten Schalttransistor mit einem vorbestimmten Takten zur Leistungskorrektur ansteuert, wenn der Stromkreis über die Diode des anderen Schalttransistors geschlossen ist.

6. Schaltkreis nach Anspruch 1, **dadurch gekennzeichnet, daß** die Steuerung (34) während eines Ladevorgangs der Spule (L1_1, L1_2) einen ersten Schalttransistor (T1) in einer der Halbbrücken während einer ersten Halbwelle schließt derart, daß über die andere Diode (D2) in der Halbbrücke ein geschlossener Stromkreis mit den Netzanschlüssen (P, N) vorliegt, und während der anderen Halbwelle der zweite Schalttransistor (T2) in der Halbbrücke geschlossen wird derart, daß über die andere Diode in der Halbbrücke ein geschlossener Stromkreis mit den Netzanschlüssen vorliegt.

7. Schaltkreis nach Anspruch 1 oder 6, **dadurch gekennzeichnet, daß** während eines Entladevorgangs der Spule in einer ersten Halbwelle ein geschlossener Stromkreis über eine der Dioden in einer der Halbbrücken, die Brückendiagonale und eine der Dioden in der anderen Halbbrücke vorliegt, während in der zweiten Halbwelle ein geschlossener Stromkreis über die Brückendiagonale und die anderen beiden Dioden vorliegt.

8. Schaltkreis nach einem der Ansprüche 1 bis 8, **dadurch gekennzeichnet, daß** die MOSFETs als Synchrongleichrichter vorgesehen sind.

9. Schaltkreis nach einem der Ansprüche 1 bis 8, **dadurch gekennzeichnet, daß** die Spule (L1_1, L1_2) gleiche Wicklungen besitzen und miteinander gekoppelt sind, wobei die Wicklungen gleichen Widerstand und gleiche Induktivität besitzen.

## Claims

1. Circuit for power factor correction in switching power supplies, chargers and the like, comprising
- a bridge circuit, which has four diodes (D1, D2, D3, D4) connected in two half-bridges,
- two MOSFETs (T1, T2, T3, T4) in each half-bridge, connected parallel to the diodes (D1, D2, D3, D4), and
- two inductors (L1_1, L1_2), each of which are connected between connections (P, N) of an AC voltage source and two connections of a bridge circuit,
- a capacitor (C1), which is connected diagonally in the bridge circuit,
- wherein the diagonal connection of the first half-bridge is connected with the ground, **characterized in that**
- a controller drives a first MOSFET with a predetermined cycle for power factor correction when the circuit is driven via the other diode of the other MOSFET of the half-bridge, and one of the MOSFETs in the other half-bridge is driven inverted with a predetermined cycle to decrease the drain-source voltage.

2. Circuit according to claim 1, **characterized in that** a controller (22) is provided for driving the circuit transistors (T1, T2), wherein circuit transistors are driven depending on the half-wave (24, 26).

3. Circuit according to claim 2, **characterized in that** the controller during a charging of the inductors (L1_1, L1_2) closes a first circuit transistor (T1) during a first half-wave such that a closed circuit with the network connections (P, N) is present on the second circuit transistor (T2) via the diode (D2) and closes the second circuit transistor (T2) during the other half-wave such that a closed circuit with the network connection (P, N) is present on the first circuit transistor (T1) via the diode (D4).

4. Circuit according to claim 2 or 3, **characterized in that** there is a closed circuit via a first diode (D1) in the second half-bridge, the bridge diagonal (C1) and a diode (D2) in the first half-bridge during a discharging of the inductors (L1_1, L1_2) during a first half-wave and there is a closed circuit in the second half-bridge via the second diode (D3) in the second half-bridge, the bridge diagonal (C1) and a diode (D4) in the first half-bridge.

5. Circuit according to claim 3 or 4, **characterized in that** the controller (22) drives a first circuit transistor with a predetermined cycle for power correction when the circuit is closed via the diode of the other circuit transistors.

6. Circuit according to claim 1, **characterized in that** the controller (34) during a charging of the inductors (L1_1, L1_2) closes a first circuit transistor (T1) in one of the half-bridges during a first half-wave such that there is a closed circuit with the network connections (P, N) via the other diode (D2) in the half-bridge, and the second circuit transistor (T2) in the half-bridge is closed during the other half-wave such that there is a closed circuit with the network connections via the other diode in the half-bridge.

7. Circuit according to claim 1 or 6, **characterized in that** during a discharging of the inductor in a first half-wave there is a closed circuit via one of the diodes in one of the half-bridges, the bridge diagonal and one of the diodes in the other half-bridge, while there is a closed circuit via the bridge diagonal and the other two diodes in the second half-wave.

8. Circuit according to one of claims 1 through 8, **characterized in that** the MOSFETs are provided as synchronous rectifiers.

9. Circuit according to one of claim 1 through 8, **characterized in that** the inductors (L1_1, L1_2) have the same windings and are connected with each other, wherein the windings have the same resistance and the same inductivity.

## Revendications

1. Circuit de correction du facteur de puissance pour des blocs de commutation, des chargeurs et similaires, avec
- un montage en pont qui présente quatre diodes (D1, D2, D3, D4) montées en deux demi-ponts,
- respectivement deux MOSFETS (T1, T2, T3, T4) montés dans les demi-ponts en parallèle avec les diodes (D1, D2, D3, D4), et
- deux bobines (L1_1, L1_2) qui sont montées respectivement entre des connexions (P, N) d'une source de tension alternative et deux connexions du montage en pont,
- un condensateur (C1) qui est monté en diagonale dans le montage en pont,
- la connexion diagonale du premier demi-pont étant connectée à la masse,
**caractérisé en ce que**
- une commande commande un premier MOSFET avec une cadence prédéfinie pour la correction du facteur de puissance si le circuit est commandé via l'autre diode de l'autre MOSFET du demi-pont, et un des MOSFETS dans l'autre demi-pont est commandé de façon inversée avec une cadence prédéfinie pour abaisser la tension drain-source.

2. Circuit selon la revendication 1, **caractérisé en ce qu'**une commande (22) est prévue pour la commande des transistors de commutation (T1, T2), la commande des transistors de commutation s'effectuant en fonction de la demi-onde (24, 26).

3. Circuit selon la revendication 2, **caractérisé en ce que**, pendant un processus de charge de la bobine (L1_1, L1_2), la commande ferme un premier transistor de commutation (T1) pendant une première demi-onde de sorte que, via la diode (D2), sur le deuxième transistor de commutation (T2), il y a un circuit électrique fermé avec les connexions de réseau (P, N) et, pendant l'autre demi-onde, elle ferme le deuxième transistor de commutation (T2) de sorte que, via la diode (D4), sur le premier transistor de commutation (T1), il y a un circuit électrique fermé avec les connexions de réseau (P, N).

4. Circuit selon la revendication 2 ou 3, **caractérisé en ce que**, pendant un processus de décharge de la bobine (L1_1, L1_2) pendant une première demi-onde, il y a un circuit électrique fermé via une première diode (D1) dans le deuxième demi-pont, la diagonale de pont (C1) et une diode (D2) dans le premier demi-pont et, dans le deuxième demi-pont, il y a un circuit électrique fermé via la deuxième diode (D3) dans le deuxième demi-pont, la diagonale de pont (C1) et une diode (D4) dans le premier demi-pont.

5. Circuit selon la revendication 3 ou 4, **caractérisé en ce que** la commande (22) commande un premier transistor de commutation avec une cadence prédéfinie pour la correction du facteur de puissance si le circuit électrique est fermé via la diode de l'autre transistor de commutation.

6. Circuit selon la revendication 1, **caractérisé en ce que** la commande (34), pendant un processus de charge de la bobine (L1_1, L1_2), ferme un premier transistor de commutation (T1) dans un des demi-ponts pendant une première demi-onde de sorte que, via l'autre diode (D2) dans le demi-pont, il y a un circuit électrique fermé avec les connexions de réseau (P, N) et, pendant l'autre demi-onde, le deuxième transistor de commutation (T2) est fermé dans le demi-pont de sorte que, via l'autre diode dans le demi-pont, il y a un circuit électrique fermé avec les connexions de réseau.

7. Circuit selon la revendication 1 ou 6, **caractérisé en ce que**, pendant un processus de décharge de la bobine dans une première demi-onde, il y a un circuit électrique fermé via une des diodes dans un des demi-ponts, la diagonale de pont et une des diodes dans l'autre demi-pont tandis que, dans la deuxième demi-onde, il y a un circuit électrique fermé via la diagonale de pont et les deux autres diodes.

8. Circuit selon une des revendications 1 à 8, **caractérisé en ce que** les MOSFETS sont prévus en tant que redresseur synchrone.

9. Circuit selon une des revendications 1 à 8, **caractérisé en ce que** les bobines (L1_1, L1_2) possèdent des enroulements identiques et sont couplées l'une à l'autre, les enroulements possédant la même résistance et la même inductance.
